Europäisches Patentamt

European Patent Office

Office européen des brevets

(11) Publication number: **0 125 012**
**B1**

(12) **EUROPEAN PATENT SPECIFICATION**

(45) Date of publication of patent specification: **04.02.87**

(21) Application number: **84302298.9**

(22) Date of filing: **04.04.84**

(51) Int. Cl.⁴: **H 04 Q 1/457, H 04 Q 11/04**

(54) **Tone source for telephone systems.**

(30) Priority: **04.05.83 CA 427409**

(43) Date of publication of application:
**14.11.84 Bulletin 84/46**

(45) Publication of the grant of the patent:
**04.02.87 Bulletin 87/06**

(84) Designated Contracting States:
**AT DE FR GB IT NL SE**

(56) References cited:
**DE-A-2 855 151**
**DE-A-3 116 576**
**GB-A-2 029 166**

(73) Proprietor: **NORTHERN TELECOM LIMITED**
**1600 Dorchester Boulevard West**
**Montreal Quebec H3H 1R1 (CA)**

(72) Inventor: **Munter, Ernst August**
**4 Nanook Crescent**
**Kanata Ontario, K2L 2A7 (CA)**
Inventor: **Aczel, Andreas Laszlo**
**8 Longwood Avenue**
**Nepean Ontario, K2H 6G2 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

# 0 125 012

**Description**

The invention relates to an apparatus and method for generating tone signals useful in telephone systems.

In telephone systems various machine generated voice frequency signals are used for transmitting supervisory and signalling information between switching facilities and for transmitting progress signals to telephone users. In a central office switching facility (CO) multifrequency (MF) signals are typically used for inter CO trunk signalling. In a private branch switching facility (PBX) dual tone multifrequency (DTMF) signals may be used to transmit dialled digits to a central office switching facility (CO). The DTMF signal family is distinctively different in comparison with the family of MF signals in order to better avoid any operational confusion between the two. Hence it has been traditional practice for a telephone equipment manufacturer to produce at least two types of tone signal generators, one for the CO environment and a different one for the PBX environment. Additional types of tone signal generators are also typically produced for providing call progress tones, for example dial tone, busy tone etc., and for providing transmission facility test tones. If the manufacturer supplies market places involving two or more telephone operating standards, for example in North America and in Europe, the number of different types of required tone signal generators likewise increases. This is particularly so in time division multiplex (TDM) telephone systems wherein pulse code modulated (PCM) signal samples are required to be compatible with either of the A law and µ law PCM standards.

GB—A—2029166 discloses a tone source for providing a plurality of encoded tones for use in a telephone system, said tones being defined in a storage medium having an index page of stored tone index addresses for identifying first storage locations of corresponding tone samples having been sequentially stored therein, comprising first means for generating sequences of index addresses corresponding to address locations in the index page; a memory means including storage locations corresponding to the index addresses, a data port, and an address port, the memory means being readable to provide an information word via the data port and writable with an information word directed thereto via the data port at a storage location defined by an instant one of the index addresses being asserted at the address port, and a register means having an output for asserting a registered information word and an input connected with the data port of the memory means, the register means being controllable to register an information word being asserted at its input, and to register an increment of said information word.

However, the system disclosed in GB—A—2029166 is a large complex circuit and is not suited to the requirements of the present invention, which are simplicity and inexpensiveness.

It is an object of the present invention to provide a simple and inexpensive tone source for a telephone system of the type disclosed in GB—A—2029166, wherein a simple means is provided of obtaining tone samples from the storage medium.

The present invention provides second means for generating a reinitialization signal in response to a predetermined characteristic of an information word having been read from the storage medium; switch means being operative in an absence of the reinitialization signal, for directing a registered information word to the address port of the storage medium to cause an information word of the corresponding storage location to be asserted at the data port of the storage medium, and for directing the increment to the data port of the memory means to cause a corresponding information word to be written at a storage location being defined by the instant index address, and being alternately operative in response to a presence of the reinitialization signal for directing the instant index address to the address port of the storage medium to cause an information word of the corresponding storage location to be asserted at the data port of the storage medium; to cause a corresponding information word to be written at the memory means storage location being defined by the instant index address; whereby tone samples are available from the storage medium for use in the telephone system.

In another aspect, the invention provides a tone source for providing sequences of encoded tone samples for use in a telephone system, comprising: a storage medium wherein each sequence is stored at corresponding sequential address locations being terminated at unique first and last address locations and wherein the last address location is associated with an end-of-tone code; an index storage medium having stored therein a first address of each of the sequences; generating means for providing a sequence of the index addresses during each frame period; characterized by a first circuit means for progressively fetching a sample of each of the tones in response to each frame occurrence in an associated telephone system; a second circuit means for causing the first circuit means to be reinitialized with each occurrence of the end-of-tone code whereby the first circuit means is caused to proceed fetching from the first address of a sequence; the second circuit means being responsive to each end-of-tone code occurrences for causing a first address of the sequence to be provided to the first circuit means from a location in the index storage medium being defined by an instant one of the index address; whereby shortly after power up, the tone source has automatically converged on to an orderly cyclic operation for providing tones for use in the telephone system.

In a further aspect, the invention provides a method for providing a plurality of predetermined tone signals for use in an operating TDM communication system, the method comprising the steps of: a) having stored sequences of samples for defining each of the tone signals at consecutive address defined permanent storage locations, having stored a first address of each sequence of samples at a respective

2

# 0 125 012

index address defined location in an index page of said permanent storage locations, and having stored at least one end-of-tone code at each address defined permanent storage location which follows a last address of each sequence of samples; b) generating a sequence of said index addresses in response to each occurrence of a frame period in the operating TDM communication system; c) registering an information word from an address defined temporary storage location corresponding to an instant one of the index addresses, and incrementing the information word to generate an instant information word; d) reproducing the instant information word in said corresponding temporary storage location; e) interrogating a content of the address defined permanent storage location corresponding to the registered information word, for a presence of the end-of-tone code; characterized by f) in response to an absence of the end-of-tone code, coupling a digital signal representation of said interrogated content to the TDM communication system, and continuing with step (c) in response to another one of the index addresses being generated in step (b); g) in response to an end-of-tone code presence, reproducing in the temporary storage location referred to in step (d), a content of an index address permanent storage location, being defined by the instant index address, and coupling a digital signal representation of an information content of a permanent one of the storage locations to the TDM communication system, the permanent storage location being defined by said content of the last referred to index address permanent storage location; and h) continuing with step (c) in response to a new instant index address being generated in step (b).

## Brief description of the drawings

An example embodiment of a tone signals generator is discussed with reference to the accompanying drawings in which:

Figure 1 is a block schematic diagram of a tone signals generator in accordance with the invention; and

Figure 2 is a graphical representation of various timing signals used in the operation of the tone signals generator in Figure 1.

## Introduction of the Example embodiment

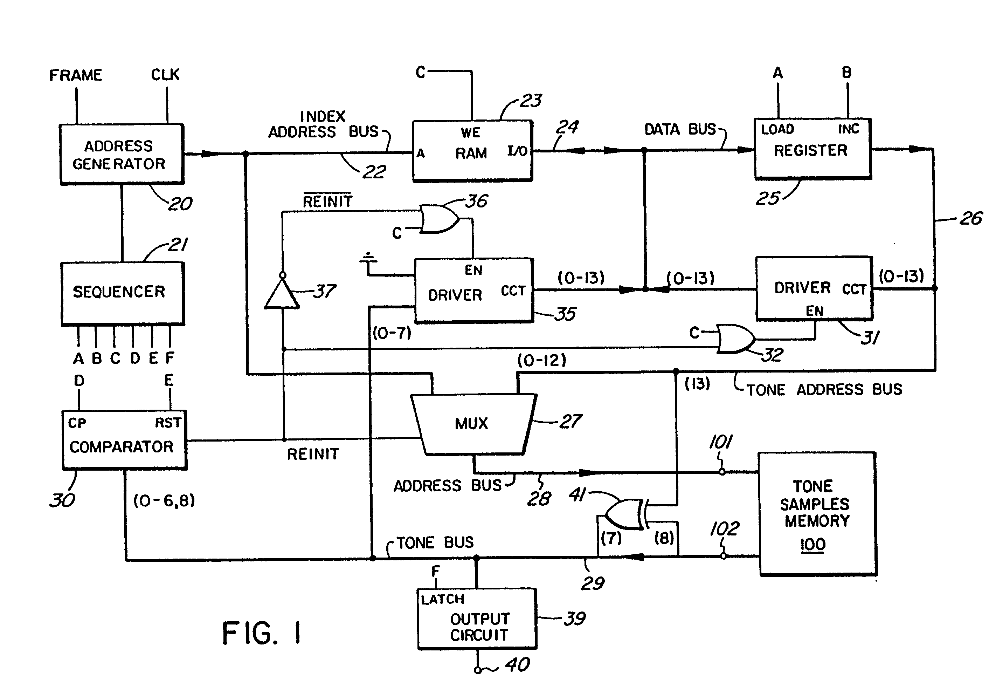

The tone signals generator in Figure 1 is automatically adaptable to providing virtually any family of signalling supervisory and progress tones required for the operation of a telephone system. The tone signals generator is particularly well suited for operation with a TDM system wherein system frame and clock signals are conveniently available for operating the tone signals generator. A particular family of required tones is defined in a tone samples memory 100. The tone samples memory 100 may be any convenient storage medium, for example a ROM having predetermined tone samples stored therein at predetermined address locations. In this example the tone samples memory 100 is organized in pages of 64 words each. The first page includes an index list of first addresses corresponding to a first address of each of the tone sample sequences stored in subsequent pages. The first tone sample of each tone sample sequence is stored at a first address location of a page and the following samples are stored at following address locations extending through one or more pages as required. It is essential that an address location immediately following the last address location of a tone sample sequence has a predetermined end-of-tone code stored therein. It is convenient but not essential that all of the address storage locations not otherwise used in the tone samples memory 100 also have the end-of-tone code stored therein.

The derivation of PCM signal samples exemplary of tone signal samples is not of primary importance to an understanding of the structure and operation of the example embodiment. However a review of methods of calculation and an example of ROM space usage are presented in an addendum which follows a description of the example embodiment.

## Description of the Example embodiment

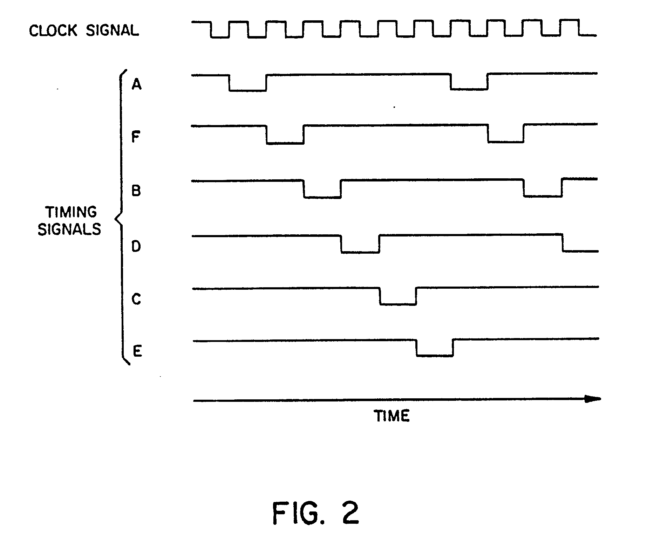

Referring to Figure 1, clock, power and ground leads, not shown, are connected as required to the illustrated circuit elements in a manner well known in the digital electronic circuit art. Only those timing signals of peculiar significance in the example embodiment, as for example those illustrated in Figure 2, are discussed in more detail. In Figure 1, an address generator 20 is connected to be responsive to frame and clock signals from an associated telephone exchange, not shown, for generating an index address sequence on an index address bus 22, during the period of the frame signal. The address generator 20 may be provided by a typical arrangement of counting circuits (not shown) wherein a portion of the counting circuits have lesser significant outputs connected to a sequencer 21 and a portion of the counting circuits have greater significant outputs connected to an address port A of a random access memory (RAM) 23, and to an input of a digital multiplexer 27. The sequencer 21 may be provided by a typical decoding logic array being adapted for this purpose or alternately by a ROM with appropriate data stored therein for generating timing signals A through F, illustrated in Figure 2, on correspondingly labelled leads. The RAM 23 includes an input/output data port I/O for both receiving data signals from and asserting data signals on leads 0—7 of a data bus 24. The RAM 23 is operational to read and write under the control of timing signal C being connected via the lead C to a write enable input WE of the RAM 23. A register circuit 25 is connected to register the signal states of the data bus 24 in response to timing signal A being connected via the lead A to a load control input of the register 25. The register circuit 25 is conveniently provided by a counter circuit having an increment control or count input INC connected to be responsive to the timing signal B for

3

adding a ONE to binary data registered therein. The binary data is registered at fourteen bit locations in the register 25 and is asserted by the register 25 on corresponding leads 0—13 of a tone address bus 26. Leads 0—12 of the tone address bus 26 are connected to an input of the multiplexer 27, and to corresponding inputs of a driver circuit 31. The lead 13 is also connected to an input of an EXCLUSIVE OR gate 41. The driver circuit 31 includes outputs 0—13 connected to the corresponding leads in the data bus 24. An enable input EN of the driver circuit 31 is connected to receive a logical OR of the timing signal C and a reinitiating signal from a lead labelled REINIT, via an OR gate 32. The data bus 24 is also connected with outputs 0—13 of a driver circuit 35. The driver circuit 35 includes an enable input EN connected to receive a logical OR of the timing signal C and an inversion of the reinitiating signal via an inverter 37 and an OR gate 36. The multiplexer 27 includes an output connected to an address bus connector 101 by an address bus 28. A tone bus 29 is connected from a tone bus connector 102 to a digital comparator 30, an output circuit 39, the driver circuit 35 and the EXCLUSIVE OR gate 41. The connectors 101 and 102 provide for connection of the tone sample memory 100. More particularly the tone samples memory 100 includes outputs 0—6 for connection to corresponding leads in the tone bus 29. Another output 7 of the tone signals memory 100 is for connection to a lead 8 in the tone bus 29. The lead 8 is connected to an input of the EXCLUSIVE OR gate 41 the output of which originates at a lead 7 of the tone bus 29. Leads 0—6 and 8 of the tone bus 29 are connected to inputs of the digital comparator circuit 30. The digital comparator circuit 30 also includes compare and reset inputs CP and RST connected to receive control signals D and E for controlling operations of the digital comparator circuit 30. Leads 0—7 of the tone bus 29 are connected to inputs of the driver circuit 35 such that the signal states of these leads are transferable to leads 5—13 of the data bus 24 respectively. Remaining inputs of the driver circuit 35 are connected to ground. Leads 0—7 of the tone bus 29 are connected to an input port of an output circuit 39. The output circuit 39 which provides for transfer of tone samples from the tone bus 29 to the associated telephone exchange via a connector 40. The output circuit 39 is connected to be responsive to the timing signal F for the purpose of registering tone signal samples appearing on the leads 0—7 of the tone bus 29. The output circuit 39 may be provided by any of several circuit structures ranging from a simple serial shift register output interface, to a fully time independent double buffered addressable output. The latter arrangement may also include connection with the output of the address generator 20. The design of any particular output circuit structure will be a matter of convenient choice for a person skilled in the electronic arts having consideration for the structure of a particular telephone exchange with which the tone signals generator is required to operate. It is envisaged that the tone signals generator be in the form of an integrated circuit, both the address generator 20 and the output circuit 39 are advantageously provided for by various circuit structures being functionally configurable by pin selectable connections to be compatible for use with various well known TDM systems.

There are two modes of operation which occur in the normal use of the tone signals generator. One is normal mode of operation, which prevails generally throughout the service life of the tone signals generator. The other is a power-up or start-up mode of operation which is a fleeting occurrence during which the tone signals generator automatically converges toward the normal mode of operation for each of the tones defined by the tone samples stored in the particular tone samples memory. Many of the circuit functions in the normal mode of operation are common to the start-up mode of operation.

In the normal mode of operation, sequential addresses are generated by the address generator 20 in response to clock signals, illustrated in Figure 2, being received from a clock lead labelled CLK. The sequential addresses are synchronized with frame signals being received from a frame lead labelled FRAME. The lesser significant bits of the addresses are used by the sequencer 21 to generate the control signals A—F illustrated in Figure 2. The more significant bits of the addresses are used for access for both reading and writing storage locations in the RAM 23 under control of the timing signal C. Each time a storage location of the RAM 23 is read onto the data bus 24 this output is registered in the register 25 and applied to the address port of the tone samples memory via the tone address bus 26, the multiplexer 27, the address bus 28 and the connector 101. The tone samples memory 100 responds by providing a corresponding tone sample or end-of-tone code via the connector 102 and the tone bus 29 to the comparator 30, the driver circuit 35 and the output circuit 39. The output circuit 39 registers the tone sample under the control of the timing signal F for use by the associated TDM telephone system. After the RAM 23 has been read, the content of the register 25 is incremented by ONE in response to the control signal B. This incremented value is transferred to the data bus via the driver circuit 31 and written into the RAM 23 so that the next sample of the tone is obtained from the tone samples memory 100. This tone sample is interrogated by the comparator 30 in which it is compared with a predetermined end-of-tone code which is a unique binary word not used to represent any of the tone samples. In the event that the end-of-tone code is recognized the reinitializing signal is asserted by the comparator 30 on the REINIT lead. The reinitialize signal causes the instant index address to be directly applied via the multiplexer 27 to the tone samples memory 100. The tone samples memory 100 responds by providing the first address of the corresponding tone sample sequence on the tone bus 29. This first address is transferred via the driver circuit 35 via leads 5—13 of the data bus 24, to the I/O port of the RAM 23 wherein it is written at the instant accessed memory location. Thus, the next occurrence of the instant index address will cause the tone samples memory 100 to provide the tone sample from the beginning of the tone sample sequence.

Upon initial start-up of the tone signals generator, the content of the RAM 23 is undefined. However as

4

may be inferred from the preceding description, access to end-of-tone codes for all of the tone sample sequences will eventually occur. Therefore the longest possible time period for complete convergence into normal operation is the frame period multiplied by the number of samples in the longest of the tone sample sequences stored in the tone sample memory 100.

Economy of memory utilization in the tone sample memory 100 is also realized in the case of symmetrical tone sample sequences in that only half of a symmetrical sequence is actually stored. One bit from the tone address bus 26 is used to control the gates 41 and 42 to either invert the sign bit of a tone sample from the memory 100 or to not invert the sign bit depending upon which half of the tone samples sequence is being addressed. This is accomplished by the EXCLUSIVE OR gate 41 and by the state of the most significant bit of a read out from the ROM 100 in response to an end-of-tone code occurrence. The most significant bit is used to indicate if the tone sample sequence is half length, as in the case of a symmetrical sequence, or is full length. For example if the most significant bit, i.e. the lead 8 is a ZERO, the most significant bit from the register 25, i.e. the lead 13, appears on the lead 7 of the tone bus 29. Thus it remains unchanged and the sign bit of each sample of the sequence is either consistently inverted or non inverted, with repeated sequences. However, if this most significant bit on the lead 8 is a ONE, the most significant bit from the register 25, i.e. the lead 13, is inverted in the EXCLUSIVE OR gate 41. The inverted state appears on the lead 7 of the tone bus 29 and subsequently causes bit 13 in the register 25 to be likewise changed to the opposite state. Hence, in this case after each occurrence of the end-of-tone code, the bit 13 for the corresponding stored tone sequence is toggled, thereby causing the sign bit to likewise be toggled with each successive pass through the stored sequence.

Addendum

The generation of PCM signals representative of predetermined tone signals requires the solution of two tasks. One task is to find the lowest number of samples N before samples repeat. This defines a cycle length. The second task is to calculate the PCM code for each sample.

The cycle length is found through deriving the greatest common divider (GCD) of the sampling rate, typically 8000 Hz, and all frequencies that make up the tone. For example, for dial-tone consisting of two frequencies 350 Hz and 440 Hz:

$$N = \frac{800}{GCD(8000,350,440)} = \frac{8000}{10} = 800.$$

It is often possible to change tone frequencies slightly and yet remain within permissible tolerances, to achieve significantly shorter cycle lengths and thereby require less memory space for storage of a tone samples sequence. For example, the dual tone multiple frequency (DTMF) digit 5 consists of frequencies of 770 Hz and 1336 Hz, and thus:

$$N = \frac{8000}{GCD(8000,770,1336)} = 4000.$$

However by shifting these frequencies slightly the GCD is increased in value such that:

$$N = \frac{8000}{GCD(8000,771.93,1333.33)} = 114.$$

The resulting frequency error is 0.25%, well within the ±1.5% standard telephone specification for such signals.

Certain symmetries may be exploited in generating samples tone signals. However, the only symmetry made use of in the example embodiment is that which allows the cycle length of a tone to be split in two halves, where the second half consists of a repeat of the first half with only the sign bit of each sample being inverted. This symmetry exists only under the following two conditions:
(a) the cycle length must be an even number of samples; and
(b) the constituent frequencies, expressed as rational fractions of 8000 Hz

$$(f_x = \frac{M_x}{N_x} \cdot 8000)$$

must all have odd numerators $M_x$.

The latter condition is always fulfilled for single frequency tones, but not necessarily with multi-frequency tones.

In the example of DTMF digit 5, the frequencies are:

$$771.93 \text{ Hz} = \frac{11}{114} \cdot 8000 \text{ Hz}; \text{ and}$$

$$1333.33 \text{ Hz} = \frac{19}{24} \cdot 8000 \text{ Hz}.$$

This tone can thus be generated by storing only 57 PCM-samples, and inverting the sign bit every second turn, i.e. 57 samples straight from memory, followed by 57 samples with the sign bit inverted.

By making full use of these two techniques to reduce memory requirements, all common tones can be generated with a requirement of less than 32 kbit of ROM.

PCM tone samples are pre-calculated conveniently by means of a computer or a calculator in two steps. In the first step linear samples are calculated by multiplying the desired amplitude factor with a sampled sine function according to

$$L_i = A_j \times \sin\left(\frac{f}{8000} \times 2\pi i + Q_o\right)$$

where:

$L_i$ = i-th linear sample

$A_j$ = amplitude

$f_j$ = frequency in Hertz

$Q_o$ = phase shift

The value $A_j$ is derived from the required level of frequency $f_j$ which is given in dBmO. To simplify the second step of later conversion to PCM, an arbitrary scale of A should be chosen to give

$$A_o = \sqrt{5215^2 + 2207^2} = 5662.78$$

for a 0 dBmO signal, wherein 5215 and 2207 are the samples of the O dBmO digital test signal which defines level relationships for law PCM, in accordance with the CCITT specification G.711.

Given a level in dBmO, the corresponding linear amplitude is:

$$A = 10 \frac{\text{Level (dBmO)} + 75.0606}{20} (\mu\text{-law})$$

The corresponding formula for A-law calculations is:

$$B = 10 \frac{\text{Level (dBmO)} + 69.1061}{20} (\text{A-law})$$

The linear samples for each frequency are calculated separately, added together sample by sample, and converted to PCM code either by table look-up or according to one of several well-known algorithms for this purpose.

Thus several degrees of freedom exist when preparing PCM codes for tone generators. Slightly changing tone frequencies can have a dramatic effect on cycle length. Similarly, the phase shifts ($Q_o$) of each frequency used in calculating the linear samples can be freely chosen but affect the peak amplitude of a multifrequency signal. This is important for generating the standard receiver OFF HOOK (ROH) tone where a maximum loudness is desired, but without clipping by the standard +3 dBm absolute coding limit. Less obviously but with dramatic effect as well, the sampling phase shift influences the distortion of the signal when it is converted from a PCM signal to an analog signal.

Frequency, phase shift, and amplitude are advantageously manipulated to create an economical implementation of a digital tone which remains acceptable within telephony tolerance standards.

Some properties of commonly used PCM telephony tones are listed in the following table wherein a first thirty-two blocks of memory (2048 words) is used to store a basic PBX tone set and a second thirty-two blocks of memory (2048 words) is used to store a basic CO/toll tone set.

| Tone | Frequencies | Error | Length | Symmetry | 64-Byte blocks |
|------|-------------|-------|--------|----------|----------------|
| (Base Page of Index Addresses) | | | | — | 1 |
| Silence | — | — | 1 | — | 1 |
| Dial tone | 350+440 | 0.47% | 91 | No | 2 |
| Audible ring | 440+480 | 0.35% | 382 | Yes | 3 |
| Busy tone | 480+620 | 0.44% | 167 | No | 3 |
| Call waiting | 440 | 0.08% | 109 | No | 2 |
| Warble | 516,650 | 0.21% | 31.37 | (No) | 2 |
| DTMF-1 | 697+1209 | 0.22% | 126 | Yes | 1 |
| DTMF-2 | 697+1336 | 0.20% | 126 | Yes | 1 |
| DTMF-3 | 697+1477 | 0.19% | 92 | No | 2 |
| DTMF-4 | 770+1209 | 0.37% | 73 | No | 2 |
| DTMF-5 | 770+1336 | 0.25% | 114 | Yes | 1 |
| DTMF-6 | 770+1477 | 0.25% | 114 | Yes | 1 |
| DTMF-7 | 852+1209 | 0.41% | 66 | No | 2 |
| DTMF-8 | 852+1336 | 0.41% | 66 | Yes | 1 |
| DTMF-9 | 852+1477 | 0.28% | 103 | No | 1 |
| DTMF-0 | 941+1336 | 0.20% | 102 | No | 2 |
| DTMF-* | 941+1209 | 0.09% | 119 | No | 2 |
| DTMF-# | 941+1477 | 0.13% | 119 | No | 2 |
| (Basic PBX-set) | | | | | 32 |
| DTMF-A | 697+1633 | 0.29% | 103 | No | 2 |
| DTMF-B | 770+1633 | 0.34% | 83 | No | 2 |
| DTMF-C | 852+1633 | 0.39% | 122 | Yes | 1 |
| DTMF-D | 941+1633 | 0.20% | 230 | Yes | 2 |
| Intercept | 440,620 | 0.11% | 109,116 | No,Yes | 3 |
| ROH | 1400+2060+ 2450+2600 | 0.68% | 120 | Yes | 1 |
| Hightone | 480 | 0% | 50 | (Yes) | 1 |
| CCIS-Cont | 1780,2010 | 0.12,0.02% | 9,191 | No | 4 |
| MF-1 | 700+900 | 0% | 80 | Yes | 1 |
| MF-2 | 700+1100 | 0% | 80 | Yes | 1 |
| MF-3 | 900+1100 | 0% | 80 | Yes | 1 |

| Tone | Frequencies | Error | Length | Symmetry | 64-Byte blocks |
|---|---|---|---|---|---|
| MF-4 | 700+1300 | 0% | 80 | Yes | 1 |
| MF-5 | 900+1300 | 0% | 80 | Yes | 1 |
| MF-6 | 1100+1300 | 0% | 80 | Yes | 1 |
| MF-7 | 700+1500 | 0% | 80 | Yes | 1 |
| MF-8 | 900+1500 | 0% | 80 | Yes | 1 |
| MF-9 | 1100+1500 | 0% | 80 | Yes | 1 |
| MF-0 | 1300+1500 | 0% | 80 | Yes | 1 |
| MF-KP | 1100+1700 | 0% | 80 | Yes | 1 |
| MF-ST | 1500+1700 | 0% | 80 | Yes | 1 |
| MF-Code 11 | 700+1700 | 0% | 80 | Yes | 1 |
| MF-Code 12 | 900+1700 | 0% | 80 | Yes | 1 |
| MF-KP2 | 1300+1700 | 0% | 80 | Yes | 1 |
| (Basic CO/toll set) | | | | | 32 |

Basic PBX and CO/toll sets=64 Blocks

## Claims

1. A tone source for providing a plurality of encoded tones for use in a telephone system, said tones being defined in a storage medium (100) having an index page of stored tone index addresses for identifying first storage locations of corresponding tone samples having been sequentially stored therein, comprising:

first means (20) for generating sequences of index addresses corresponding to address locations in the index page;

a memory means (23) including storage locations corresponding to the index addresses, a data port (I/O), and an address port (A), the memory means being readable to provide an information word via the data port and writable with an information word directed thereto via the data port at a storage location defined by an instant one of the index addresses being asserted at the address port;

a register means (25) having an output for asserting a registered information word and an input connected with the data port of the memory means, the register means being controllable to register an information word being asserted at its input, and to register an increment of said information word; characterised by

second means (30) for generating a reinitialization signal in response to a predetermined characteristic of an information word having been read from the storage medium (100);

switch means (27, 31) being operative in an absence of the reinitialization signal, for directing a registered information word to the address port of the storage medium to cause an information word of the corresponding storage location to be asserted at the data port of the storage medium, and for directing the increment to the data port of the memory means (23) to cause a corresponding information word to be written at a storage location being defined by the instant index address, and being alternately operative in response to a presence of the reinitialization signal for directing the instant index address to the address port of the storage medium to cause an information word of the corresponding storage location to be asserted at the data port of the storage medium; to cause a corresponding information word to be written at the memory means storage location being defined by the instant index address;

whereby tone samples are available from the storage medium for use in the telephone system.

2. A tone source as defined in Claim 1 further comprising:

an index address bus (22) being connected between an output of the first means and the address port of the memory means;

a data bus (24) being connected between the data port of the memory means and the input of the register means;

a tone address bus (26) being connected to the output of the register means;

and wherein the switch means comprises:

first driver circuits (31, 32) having inputs connected to the tone address bus and outputs connected to the data bus and being controlled to periodically assert the registered information word on the data bus;

a multiplexer circuit (27) having a first input being connected to the tone address bus, a second input being connected to the index address bus, the multiplexer circuit being normally operative for directing the registered information word to the address port of the storage medium, and being operative in response to the reinitialization signal for directing an index address to the address port of the storage medium; and

second driver circuits (35, 36, 37) having outputs connected to the data bus and being responsive to the initialization signal for asserting an information word corresponding to an output of the data port of the storage medium on the data bus.

3. A tone source as defined in Claim 2 further comprising:

a logic circuit (41) being connected in series with a sign bit output appearance of the data port of the storage medium, and being responsive to a predetermined bit of each registered information word for generating a sample sign bit being either inverted or non-inverted in accordance with the signal state of the predetermined bit.

4. A tone source for providing sequences of encoded tone samples for use in a telephone system, comprising:

a storage medium (100) wherein each sequence is stored at corresponding sequential address locations being terminated at unique first and last address locations and wherein the last address location is associated with an end-of-tone code;

an index storage medium (100) having stored therein a first address of each of the sequences;

generating means (20) for providing a sequence of the index addresses during each frame period;

characterized by a first circuit means (25, 31) for progressively fetching a sample of each of the tones in response to each frame occurrence in an associated telephone system;

a second circuit means (30, 35, 36, 37) for causing the first circuit means to be reinitialized with each occurrence of the end-of-tone code whereby the first circuit means is caused to proceed fetching from the first address of a sequence;

the second circuit means being responsive to each end-of-tone code occurrences for causing a first address of the sequence to be provided to the first circuit means from a location in the index storage medium being defined by an instant one of the index address;

whereby shortly after power up, the tone source has automatically converged on to an orderly cyclic operation for providing tones for use in the telephone system.

5. A tone source as defined in Claim 4 wherein: the end-of-tone code is stored at a plurality of sequential storage locations following each last address of a plurality of the stored sequences.

6. A method for providing a plurality of predetermined tone signals for use in an operating TDM communication system, the method comprising the steps of:

a) having stored sequences of samples for defining each of the tone signals at consecutive address defined permanent storage locations, having stored a first address of each sequence of samples at a respective index address defined location in an index page of said permanent storage locations, and having stored at least one end-of-tone code at each address defined permanent storage location which follows a last address of each sequence of samples;

b) generating a sequence of said index addresses in response to each occurrence of a frame period in the operating TDM communication system;

c) registering an information word from an address defined temporary storage location corresponding to an instant one of the index addresses, and incrementing the information word to generate an instant information word;

d) reproducing the instant information word in said corresponding temporary storage location; characterised by

e) interrogating a content of the address defined permanent storage location corresponding to the registered information word, for a presence of the end-of-tone code;

f) in response to an absence of the end-of-tone code, coupling a digital signal representation of said interrogated content to the TDM communication system, and continuing with step (c) in response to another one of the index addresses being generated in step (b);

g) in response to an end-of-tone code presence, reproducing in the temporary storage location referred to in step (d), a content of an index address permanent storage location, being defined by the instant index address, and coupling a digital signal representation of an information content of a permanent one of the storage locations to the TDM communication system, the permanent storage location being defined by said content of the last referred to index address permanent storage location; and

h) continuing with step (c) in response to a new instant index address being generated in step (b).

**Patentansprüche**

1. Tonquelle zur Schaffung einer Vielzahl von codierten Tönen zur Verwendung bei einem Fernsprechsystem, wobei die Töne in einem Speichermedium (100) definiert sind mit einer Indexseite von gespeicherten Ton-Indexadressen zur Identifizierung erster Speicherplätze, an denen entsprechende Tonmuster sequentiell eingespeichert sind, mit:

ersten Mitteln (20) zur Erzeugung von Folgen von Index-adressen entsprechend Adreßplätzen in der Indexseite;

einem Speichermittel (23) mit den Indexadressen entsprechenden Speicherplätzen, einem Datenanschluß (I/O) und einem Adreß-Anschluß (A), wobei das Speichermittel zur Schaffung eines Informationswortes über den Datenanschluß auslesbar und mit einem dazu gerichteten Informationswort über den Datenanschluß an einem Speicherplatz beschreibbar ist, der durch eine gegenwärtige der an den Adreßanschluß geleiteten Indexadressen definiert ist;

einem Registermittel (25) mit einem Ausgang zum Zuleiten eines registrierten Informationswortes und einem mit dem Datenanschluß des Speichermittels verbundenen Eingang, wobei das Registermittel zum Registrieren eines an seinen Eingang zugeleiteten Informationswortes und zum Registrieren eines Inkrementes des Informationswortes steuerbar ist; gekennzeichnet durch:

zweite Mittel (30) zur Erzeugung eines Wieder-Initialisierungssignals in Abhängigkeit von einer vorbestimmten Charakteristik eines Informationswortes, das aus dem Speichermedium (100) ausgelesen wurde;

Schaltmittel (27, 31), die in Abwesenheit des Wiederinitialisierungssignales zum Richten eines registrierten Informationswortes zu dem Adreß-Anschluß des Speichermediums betreibbar sind, um ein Informationswort des entsprechenden Speicherplatzes an den Datenanschluß des Speichermediums zuleiten zu lassen und um das Inkrement zu dem Datenanschluß des Speichermittels (23) zu richten, um ein entsprechendes Informationswort an einem durch die gegenwärtige Indexadresse definierten Speicherplatz einschreiben zu lassen, und die alternativ in Abhängigkeit von der Anwesenheit des Wiederinitialisierungssignales zum Richten der gegenwärtigen Indexadresse zu dem Adreß-Anschluß des Speichermediums betreibbar sind, um ein Informationswort des entsprechenden Speicherplatzes an den Datenanschluß des Speichermediums zuleiten zu lassen, um ein entsprechendes Informationswort an dem durch die gegenwärtige Indexadresse definierten Speicherplatz einschreiben zu lassen;

wodurch Tonmuster von dem Speichermedium zur Verwendung in dem Fernsprechsystem verfügbar sind.

2. Tonquelle nach Anspruch 1, weiter enthaltend:

einen zwischen einem Ausgang des ersten Mittels und dem Adreß-Anschluß des Speichermittels angeschlossenen Indexadreß-Bus (22);

einen zwischen dem Datenanschluß des Speichermittels und dem Eingang des Registermittels angeschlossenen Daten-Bus 24;

einen mit dem Ausgang des Registermittels verbundenen Tonadreß-Bus (26);

und bei der die Schaltmittel umfassen:

erste Ansteuerschaltungen (31, 32) mit an dem Tonadreß-Bus angeschlossenen Eingängen und an dem Daten-Bus an geschlossenen Ausgängen, die zum periodischen Richten des registrierten Informationswortes an den Daten-Bus gesteuert sind,

eine Multiplexer-Schaltung (27) mit einem mit dem Tonadreß-Bus verbundenen ersten Eingang, einem mit dem Indexadreß-Bus verbundenen zweiten Eingang, wobei die Multiplexer-Schaltung normalerweise zum Richten des registrierten Informationswortes zu dem Adreßanschluß des Speichermediums betreibbar ist und in Abhängigkeit von dem Wiederinitialisierungssignal zum Richten einer Indexadresse an den Adreßanschluß des Speichermediums betreibbar ist; und

zweite Ansteuerschaltungen (35, 36, 37) mit Ausgängen, die mit dem Daten-Bus verbunden sind und auf das Initialisierungssignal zum Zuleiten eines einem Ausgangssignal des Datenanschlusses des Speichermediums entsprechenden Informationswortes an dem Datenbus reagieren.

3. Tonquelle nach Anspruch 2, weiter enthaltend:

eine Logikschaltung (41), die in Reihe mit einer Vorzeichenbit-Ausgangs-Auftrittsstelle des Datenanschlusses des Speichermediums angeschlossen ist und auf ein vorbestimmtes bit jedes registrierten Informationswortes zur Erzeugung eines Muster-Vorzeichenbits reagirt, das entweder invertiert oder nichtinvertiert wird entsprechend dem Signalzustand des vorbestimmten bit.

4. Tonquelle zur Schaffung von Folgen von codierten Tonmustern zur Verwendung bei einem Fernsprechsystem, mit:

einem Speichermedium (100), bei dem jede Folge an entsprechenden sequentiellen Adreßplätzen gespeichert ist, die an eindeutigen ersten und letzten Adreßplätzen begrenzt sind und bei denen der letzte Adreßplatz einem Tonende-Code zugeordnet ist;

einem Index-Speichermedium (100), in dem eine erste Adresse jeder Folge gespeichert ist;

Generatormitteln (20) zur Schaffung einer Folge der Indexadressen währen jeder Rahmen-Zeitlänge;

gekennzeichnet durch ein erstes Schaltungsmittel (25, 31) zum fortschreitenden Abholen eines Musters von jedem Ton in Abhängigkeit von jedem Rahmen-Auftreten bei einem zugeordneten Fernsprechsystem;

eine zweites Schaltungsmittel (30, 35, 36, 37), um die Wiederinitialisierung des ersten Schaltungsmittels bei jedem Auftreten des Tonende-Codes zu veranlassen, wodurch das erste Schaltungsmittel veranlaßt wird, das Abholen von der ersten Adresse einer Folge ab fortzusetzen;

wobei das zweite Schaltungsmittel auf jedes Auftreten eines Tonende-Codes reagiert, um zu

# 0 125 012

veranlassen, daß eine erste Adresse der Folge zu dem ersten Schaltungsmittel von einem Platz in dem Indexspeichermittel besorgt wird, der durch eine gegenwärtig anliegende Indexadresse definiert ist;

wodurch kurz nach Einschalten die Tonquelle automatisch in einen ordentlichen zyklischen Betrieb zur Schaffung von Tönen zur Verwendung bei dem Fernsprechsystem eingelaufen ist.

5. Tonquelle nach Anspruch 4, bei der: der Tonende-Code an einer Vielzahl von sequentiellen Speicherplätzen gespeichert ist, folgend jeder letzten Adresse einer Vielzahl der gespeicherten Folgen.

6. Verfahren zum Erzeugen einer Vielzahl von vorbestimmten Tonsignalen zur Verwendung bei einem arbeitenden TDM-Verbindungssystem, mit den Schritten:

a) es sind Musterolgen zum Definieren jedes Tonsignales an Folgeadresse-definierten permanenten Speicherplätzen gespeichert, es ist eine erste Adresse jeder Musterfolge an einem jeweiligen durch Indexadresse definierten Platz in einer Indexseite der permanenten Speicherplätze gespeichert und es sind mindestens ein Tonende-Code an jedem adreß-definierten permanenten Speicherplatz gespeichert, der einer letzten Adresse jeder Musterfolge folgt;

b) Erzeugen einer Folge der Indexadressen in Abhängigkeit von jedem Auftreten einer Rahmenperiode bei dem arbeitenden TDM-Verbindungssystem;

c) Registrieren eines Informationswortes von einem adreß-definierten zeitweiligen Speicherplatz entsprechend einer gegenwärtigen Indexadresse und Inkrementieren des Informationswortes zu Erzeugung eines gegenwärtigen Informationswortes;

d) Wiedergeben des gegenwärtigen Informationswortes in dem entsprechenden zeitweiligen Speicherplatz; gekennzeichnet durch:

e) Abfragen eines Inhaltes des dem registrierten Informationswort entsprechenden adreß-definierten permanenten Speicherplatzes nach Anwesenheit des Tonende-Codes;

f) in Abhängigkeit von einer Abwesenheit des Tonende-Codes, Enkoppeln einer digitalen Signaldarstellung des abgefragten Inhaltes zu dem TDM-Verbindungssystem und Fortsetzen mit Schritt (c) in Abhängigkeit von einer weiteren der in Schritt (b) erzeugten Indexadressen;

g) in Abhängigkeit von einer Anwesenheit eines Tonende-Codes, Wiedergeben eines Inhaltes eines permanenten index-adressierten Speicherplatzes der durch die gegenwärtige Indexadresse definiert ist, in dem in Schritt (d) angeführten temporären Speicherplatz und Koppeln einer digitalen Signaldarstellung eines Informationsinhaltes eines permanenten der Speicherplätze zu dem TDM-Verbindungssystem, wobei der permanente Speicherplatz durch den Inhalt des zuletzt angeführten permanenten index-adressierten Speicherplatzes definiert ist; und

h) Fortsetzen mit Schritt (c) in Abhängigkeit von der Erzeugung einer neuen gegenwärtigen Indexadresse nach Schritt (b).

## Revendications

1. Générateur de tonalité pour produire une pluralité de tonalités codées utilisables dans un système téléphonique, lesdites tonalités étant définies dans un moyen de stockage (100) ayant une page d'index d'adresses d'index de tonalité stockées pour identifier des premiers emplacements de stockage d'échantillons de tonalité correspondants, y ayant été séquentiellement stockés comprenant:

— un premier moyen (20) pour produire des séquences d'adresses d'index correspondant à des emplacements d'adresses dans la page d'index;

— un moyen à mémoire (23) comportant des emplacements de stockage correspondant aux adresses d'index, un port de données (E/S), et un port d'adresses (A), le moyen à mémoire pouvant être lu pour fournir un mot d'information par l'intermédiaire du port de données et permettant d'écrire un mot d'information dirigé vers celui-ci par l'intermédiaire du port de données dans un emplacement de stockage défini par une adresse d'index instantanée parmi les adresses d'index appliquées au port d'adresses;

— un moyen à registre (25) ayant une sortie pour appliquer un mot d'information enregistré et une entrée connectée au port de données du moyen à mémoire, le moyen à registre pouvant être commandé pour enregistrer un mot d'information appliqué à son entrée, et pour enregistrer un incrément dudit mot d'information, caractérisé par:

— un second moyen (30) pour élaborer un signal de réinitialisation en réponse à une caractéristique prédéterminée d'un mot d'information ayant été lu dans le moyen de stockage (100);

— un moyen de commutation (27, 31) fonctionnant en l'absence du signal de réinitialisation pour diriger un mot d'information enregistré vers le port d'adresses du moyen de stockage afin de provoquer l'application d'un mot d'information de l'emplacement de stockage correspondant sur le port de données du moyen de stockage, et pour diriger l'incrément vers le port de données du moyen à mémoire (23) afin de provoquer l'écriture d'un mot d'information correspondant à un emplacement de stockage défini par l'adresse d'index instantanée, et étant alternativement activé en réponse à la présence du signal de réinitialisation pour diriger l'adresse d'index instantanée vers le port d'adresses du moyen de stockage afin de provoquer l'application d'un mot d'information de l'emplacement de stockage correspondant sur le port de données du moyen de stockage; afin de provoquer l'écriture d'un

**0 125 012**

mot d'information correspondant à l'emplacement de stockage du moyen à mémoire défini par l'adresse d'index instantanée;

— de sorte que des échantillons de tonalité sont fournis par le moyen de stockage afin d'être utilisés dans le système téléphonique.

2. Générateur de tonalité selon la revendication 1, comprenant en outre:

— un bus d'adresses d'index (22) connecté entre une sortie du premier moyen et le port d'adresses du moyen à mémoire;

— un bus de données (24) connecté entre le port de données du moyen à mémoire et l'entrée du moyen à registre;

— un bus d'adresses de tonalité (26) connecté à la sortie du moyen à registre;

— et dans lequel le moyen de commutation comprend:

— des premiers circuits d'attaque (31, 32) ayant des entrées connectées au bus d'adresses de tonalité et les sorties connectées au bus de données et étant commandés de façon à appliquer périodiquement le mot d'information enregistré sur le bus de données;

— un circuit multiplexeur (27) ayant une première entrée connectée au bus d'adresses de tonalité, une seconde entrée connecté au bus d'adresses d'index, le circuit multiplexeur étant normalement actif pour diriger le mot d'information enregistré vers le port d'adresses du moyen de stockage et étant activé en réponse au signal de réinitialisation pour diriger une adresse d'index vers le port d'adresses du moyen de stockage, et

— des seconds circuits d'attaque (35, 36, 37) ayant des sorties connectées au bus de données et étant sensibles au signal de réinitialisation pour appliquer un mot d'information correspondant à une sortie du port de données du moyen de stockage sur le bus de données.

3. Générateur de tonalité selon la revendication 2, comprenant en outre:

— un circuit logique (41) connecté en série avec une sortie de bit de signe du port de données du moyen de stockage et sensible à un bit prédéterminé de chaque mot d'information enregistré pour produire un bit de signe d'échantillon qui est soit inversé soit non inversé en fonction de l'état du signal du bit prédéterminé.

4. Générateur de tonalité pour produire des séquences d'échantillons de tonalité codés à utiliser dans un système téléphonique, comprenant:

— un moyen de stockage (100) dans lequel chaque sequence est stockée à des emplacements d'adresses séquentiels correspondans se terminant à un premier et à un dernier emplacement d'adresses uniques et dans lequel le dernier emplacement d'adresses est associé à un code de fin de tonalité;

— un moyen de stockage d'index (100) dans lequel est stockée une première adresse de chacune des séquences;

— un moyen générateur (20) pour fournir une séquence d'adresses d'index pendant chaque période de trame;

caractérisé par un premier circuit (25, 31) permettant de rechercher progressivement un échantillon de chacune des tonalités en réponse à chaque apparition de trame dans un système téléphonique associé;

— un second circuit (30, 35, 36, 37) pour provoquer la réinitialisation du premier circuit à chaque apparition du code de fin de tonalité, le premier circuit étant ainsi amené à effectuer une recherche à partir de la première adresse d'une séquence;

— le second circuit étant sensible à chacune des apparitions de code de fin de tonalité pour provoquer l'application d'une première adresse de la séquence au premier circuit à partir d'un emplacement dans le moyen de stockage d'index, défini par une adresse instantanée parmi les adresses d'index;

— de sorte que peu de temps après la mise sous tension, le générateur de tonalité a automatiquement convergé vers un fonctionnement cyclique ordonné pour fournir des tonalités utilisables dans le système téléphonique.

5. Générateur de tonalité selon la revendication 4, dans lequel: le code de fin de tonalité est stocké en une pluralité d'emplacements de stockage séquentiels suivant chaque dernière adresse d'une pluralité des séquences stockées.

6. Procédé pour fournir une pluralité de signaux de tonalité prédéterminés utilisables dans un système de télécommunications MRT en cours de fonctionnement, le procédé comprenant les étapes consistant:

a) à stocker des séquences d'échantillons pour définir chacun des signaux de tonalité en des emplacements de stockage permanents consécutifs définis par des adresses, à stocker une première adresse de chaque séquence d'échantillons en un emplacement respectif défini par des adresses d'index dans une page d'index desdits emplacements de stockage permanents, et à stocker au moins un code de fin de tonalité à chaque emplacement de stockage permanent défini par une adressé, consécutif à une dernière adresse de chaque séquence d'échantillons;

**0 125 012**

b) à produire une séquence desdites adresses d'index en réponse à chaque apparition d'une période de trame dans le système de télécommunications MRT en cours de fonctionnement;

c) à enregistrer un mot d'information à partir d'un emplacement de stockage temporaire défini par une adresse correspondant à une adresse d'index instantanée parmi des adresses d'index, et à incrémenter le mot d'information pour produire un mot d'information instantané;

d) à reproduire le mot d'information instantané dans ledit emplacement de stockage temporaire correspondant; caractérisé par les étapes consistant:

e) à interroger un contenu de l'emplacement de stockage permanent défini par une adresse correspondant au mot d'information enregistré, pendant la présence du code de fin de tonalité;

f) en réponse à l'absence du code de fin de tonalité, à coupler une représentation en signal numérique dudit contenu interrogé au système de télécommunications MRT, et à revenir à l'étape (c) en réponse à une autre des adresses d'index produite à l'étape (b);

g) en réponse à la présence d'un code de fin de tonalité, à reproduire dans l'emplacement de stockage temporaire désigné à l'étape (d), un contenu d'un emplacement de stockage permanent d'adresse d'index, défini par l'adresse d'index instantanée, et à coupler une représentation en signal numérique d'un contenu d'information d'un emplacement de stockage permanent parmi les emplacements de stockage au système de télécommunications MRT, l'emplacements de stockage permanent étant défini par ledit contenu du dernier emplacement de stockage permanent d'adresse d'index désigné; et

h) revenir à l'étape (c) en réponse à une nouvelle adresse d'index instantanée produite à l'étape (b).

FIG. 1

FIG. 2